# EUROPEAN PATENT APPLICATION

(11) **EP 4 648 043 A1**
(43) Date of publication of application: **12.11.2025**
(21) Application number: 23919007.7
(22) Date of filing: 31.01.2023
(51) Int. Cl.: G10K 11/178

(54) **VEHICLE CONTROL METHOD AND APPARATUS, AND ELECTRONIC DEVICE AND STORAGE MEDIUM**

(71) Applicant: Shenzhen Yinwang Intelligent Technologies Co., Ltd., Shenzhen, Guangdong 518110 (CN)
(72) Inventor: ZHANG, Binbin, Shenzhen, Guangdong 518129 (CN); PENG, Lei, Shenzhen, Guangdong 518129 (CN); WANG, Junhan, Shenzhen, Guangdong 518129 (CN); CHAI, Benben, Shenzhen, Guangdong 518129 (CN); ZHANG, Siliang, Shenzhen, Guangdong 518129 (CN); JIANG, Siwen, Shenzhen, Guangdong 518129 (CN); ZHANG, Wuyi, Shenzhen, Guangdong 518129 (CN)
(74) Representative: Körber, Martin Hans
(86) International application number: PCT/CN2023/074039
(87) International publication number: WO 2024/159427

(57) **Abstract**

A vehicle control method and apparatus, an electronic device, and a storage medium are provided. The method may include: when a range extender of a vehicle works, obtaining an electricity generation rotational speed signal during working of the range extender (S11); generating a first noise suppression signal based on the electricity generation rotational speed signal, where the first noise suppression signal is used to suppress noise during working of the range extender (S12); and outputting the first noise suppression signal through a speaker in the vehicle (S13). In this method, effective noise reduction for the range extender can be implemented.

## Description

### TECHNICAL FIELD

This application relates to the field of vehicle technologies, and in particular, to a vehicle control method and apparatus, an electronic device, and a storage medium.

### BACKGROUND

A range extender is an apparatus, in a vehicle, configured to provide additional electric energy, so that mileage of the vehicle can be increased. The range extender includes two parts: an engine and a generator, and has large noise during working. Therefore, a corresponding noise reduction solution usually needs to be used together to reduce the noise during working of the range extender and ensure ride experience. However, effective noise reduction usually cannot be implemented.

### SUMMARY

This application provides a vehicle control method and apparatus, an electronic device, and a storage medium, so that noise suppression effect can be ensured.

According to a first aspect, this application provides a vehicle control method. The vehicle control method is applied to a vehicle, and is performed by an active noise reduction system of the vehicle. The method includes: when a range extender of the vehicle works, obtaining an electricity generation rotational speed signal during working of the range extender; generating a first noise suppression signal based on the electricity generation rotational speed signal, where the first noise suppression signal is used to suppress noise during working of the range extender; and outputting the first noise suppression signal through a speaker in the vehicle.

The electricity generation rotational speed signal is a rotational speed signal of a generator in the range extender.

In the method provided in this application, when the range extender works, the noise suppression signal is generated based on the electricity generation rotational speed signal during working of the range extender, and then the noise suppression signal is output through the speaker in the vehicle to perform noise reduction. A sensor is used in the range extender to collect the electricity generation rotational speed signal with a delay far less than a delay of collecting the noise by a microphone. A collection speed of a photoelectric or mechanical sensor is faster than that of sound collection. In addition, a path for collecting a rotational speed of the range extender by the sensor is shorter than a path for collecting the noise by the microphone. Therefore, the delay is low. In addition, collection precision of collecting the electricity generation rotational speed signal by using the sensor is high. Because the collection delay is low and the collection precision is high, the noise suppression signal generated based on the electricity generation rotational speed signal has a small delay and high precision, so that noise suppression effect of the range extender can be ensured.

In a possible implementation of this application, the active noise reduction system may receive an electricity generation rotational speed signal sent by a range extender system.

In another possible implementation of this application, the active noise reduction system may receive an electricity generation rotational speed signal sent by a vehicle control unit. The electricity generation rotational speed signal of the whole vehicle control unit is received from the range extender system.

In a possible implementation of this application, generating the first noise suppression signal based on the electricity generation rotational speed signal may include:
converting the electricity generation rotational speed signal into a frequency-domain signal through fast Fourier transform; performing frequency multiplication processing on the frequency-domain signal to obtain a frequency multiplication signal; performing phase inversion processing on the frequency-domain signal and the frequency multiplication signal; and converting, through inverse fast Fourier transform, the frequency-domain signal and the frequency multiplication signal that have undergone phase inversion processing into time-domain signals, to obtain the first noise suppression signal.

In this implementation, the frequency multiplication signal of the electricity generation rotational speed signal is obtained through frequency multiplication, and then phase inversion processing is performed on the frequency-domain signal and the frequency multiplication signal, so that the noise suppression signal obtained through phase processing can neutralize an original noise signal, to eliminate the noise. When the noise is eliminated, the frequency-domain signal of the rotational speed is considered, and the frequency multiplication signal that brings the noise is also considered, so that the noise generated by the range extender is suppressed, and the noise suppression effect is ensured.

Phase inversion processing means shifting a phase difference by 180 degrees, so that an amplitude changes from a to -a. The resulting noise suppression signal may neutralize the noise, to implement noise suppression.

In the foregoing processing process, a frequency multiplication order of the frequency multiplication signal is related to a structure of the vehicle. For example, the frequency multiplication order of the frequency multiplication signal is related to a quantity of cylinders of an engine in the range extender of the vehicle.

Therefore, the step of performing frequency multiplication processing on the frequency-domain signal to obtain the frequency multiplication signal may include:
obtaining the quantity of cylinders of the engine in the range extender; determining the frequency multiplication order based on the quantity of cylinders of the engine; and performing frequency multiplication processing on the frequency-domain signal based on the frequency multiplication order to obtain the frequency multiplication signal.

Herein, the quantity of cylinders of the engine may be pre-stored in the active noise reduction system of the vehicle, to facilitate calculation of the frequency multiplication signal. Alternatively, the quantity of cylinders of the engine may be obtained from another system of the vehicle, for example, from the vehicle control unit.

For example, when the quantity of cylinders of the engine is 2 or 4, it is determined that the frequency multiplication order is 2 and 4.

For example, when the quantity of cylinders of the engine is 3, it is determined that the frequency multiplication order is 3 and 6.

In the foregoing example, the quantity of cylinders ranges from 2 to 4, which is common configuration of a quantity of cylinders in vehicles. In another implementation, the quantity of cylinders may alternatively be another value, and the frequency multiplication order is usually the quantity of cylinders, twice the quantity of cylinders, 1/2 of the quantity of cylinders, or the like.

When phase inversion is performed on the frequency-domain signal and the frequency multiplication signal, because initial phases of the frequency-domain signal and the frequency multiplication signal are unknown, phase inversion processing cannot be directly performed. In this application, phase inversion processing is performed in the following manner: First, a phase value of the frequency-domain signal and a phase value of the frequency multiplication signal are assumed. Then, processing is performed based on the assumed phase values. Then, it is determined, based on processed noise feedback, whether the assumption is reasonable. If the assumption is reasonable, the assumed phase values are used subsequently to perform noise reduction processing in a current vehicle traveling process. If the assumption is unreasonable, the assumed phase values continue to be adjusted, and noise reduction processing is performed again, to finally find proper phase values through iteration.

In an implementation of this application, the feedback may be implemented by collecting and analyzing the noise in the vehicle, for example, obtaining a noise signal collected by the microphone in the vehicle, and calculating the noise suppression effect based on the noise signal. The analysis herein may be analyzing whether the noise in the vehicle is lower than an expected noise value, to determine noise reduction effect.

The calculating the noise suppression effect may be calculating whether an amplitude and/or energy of the noise signal are/is lower than a threshold. For example, an energy spectrum of the noise signal is calculated, to determine whether the amplitude and/or the energy of the noise signal are/is lower than the threshold. If the amplitude and/or the energy of the noise signal are/is lower than the threshold, it is determined that the noise suppression effect meets a condition. If the amplitude and/or the energy of the noise signal are/is not lower than the threshold, it is determined that the noise suppression effect does not meet a condition.

Correspondingly, performing phase adjustment processing on the frequency-domain signal and the frequency multiplication signal includes:
performing phase inversion processing by using a first phase value and a second phase value as a phase of a first frequency-domain signal and a phase of a first frequency multiplication signal respectively; and when the noise suppression effect meets the condition after the first phase value and the second phase value are used to perform phase inversion processing, performing phase inversion processing by using the first phase value and the second phase value as a phase of a second frequency-domain signal and a phase of a second frequency multiplication signal respectively, where the second frequency-domain signal and the first frequency-domain signal are frequency-domain signals obtained through conversion of two consecutive electricity generation rotational speed signals, and the second frequency multiplication signal is a frequency multiplication signal of the second frequency-domain signal.

The first frequency-domain signal and the second frequency-domain signal are frequency-domain signals corresponding to the two consecutive rotational speed signals.

The first phase value and the second phase value herein are the initial phases assumed for the frequency-domain signal and the frequency multiplication signal, and the first phase value and the second phase value may be the same or may be different. If the noise suppression effect of the output noise suppression signal meets the condition after phase inversion processing is performed based on the foregoing phases, it indicates that the assumed first phase value and second phase value are reasonable, and no adjustment is required. In processing of next periodicity, the first phase value and the second phase value continue to be used.

If the noise suppression effect of the output noise suppression signal does not meet the condition, that is, when the noise suppression effect does not meet the condition after the first phase value and the second phase value are used to perform phase inversion processing, the first phase value and the second phase value are adjusted to obtain a third phase value and a fourth phase value, and phase inversion processing is performed by using the third phase value and the fourth phase value as the phase of the second frequency-domain signal and the phase of the second frequency multiplication signal respectively.

That the first phase value and the second phase value are adjusted to obtain a third phase value and a fourth phase value may include: increasing or decreasing the first phase value and the second phase value based on a preset step to obtain the third phase value and the fourth phase value.

There may be a plurality of frequency multiplication signals (for example, frequency doubling and frequency quadrupling, or frequency tripling and frequency sextupling). Therefore, there may also be a plurality of corresponding second phase values, and second phase values of different frequency multiplication signals may be the same or may be different.

Because phase values of the frequency-domain signal and the plurality of frequency multiplication signals are all assumed values, when the phase values are adjusted, a phase value of one signal may be adjusted each time, and another phase value is adjusted after adjustment of an unreasonable phase value is completed. In this manner, a case in which a combination of phase values with best noise reduction effect is prone to being missed due to adjustment of a plurality of phase values at the same time is avoided.

In some possible implementations, after generation of the noise suppression signal is completed, the noise suppression signal may be delivered to another device in the vehicle, and the another device controls output of the noise suppression signal. That is, generation of the noise suppression signal and control of output of the noise suppression signal are performed by different bodies.

In some other possible implementations, after generation of the noise suppression signal is completed, the speaker in the vehicle is directly controlled to output the first noise suppression signal. That is, generation of the noise suppression signal and control of output of the noise suppression signal are performed by the same body.

In a possible implementation of this application, after generation of the noise suppression signal is completed, that the speaker in the vehicle is controlled to output the first noise suppression signal includes:
when a quantity of people in the vehicle is less than a people quantity threshold, outputting the first noise suppression signal through a headrest speaker of a seat in the vehicle; or
when a quantity of people in the vehicle is not less than a people quantity threshold, outputting the first noise suppression signal through all speakers in the vehicle.

Output of the noise suppression signal may affect music play in the vehicle. If the quantity of people in the vehicle is small, the people are usually seated in positions such as a driver's seat or a front passenger seat. The seats are provided with headrest speakers. In this case, noise suppression is output through the headrest speakers. The passenger can obtain the noise suppression effect and the noise is avoided. In addition, music play of another speaker is not affected. When there are a large quantity of passengers, the headrest speaker may not provide comprehensive coverage, noise suppression is output through all the speakers in the vehicle, to ensure the noise suppression effect to a greatest extent. In addition, only the quantity of people is considered herein, and a position of the passenger is not considered. This is a simplified determining manner, and saves vehicle control resources.

For example, the quantity of people in the vehicle may be determined based on data collected by a seat occupation sensor, a camera, or the like.

For example, the people quantity threshold may be 2 to 4, for example, 3.

Optionally, in this implementation, in addition to the quantity of passengers in the vehicle, the position of the passenger may be further considered. For example, when the quantity of people in the vehicle is less than the people quantity threshold, it may be further determined whether a seat in which each passenger is seated is provided with a headrest speaker. If the quantity of people in the vehicle is less than the people quantity threshold, and all seats in which the passengers are seated are provided with headrest speakers, the first noise suppression signal is output through the headrest speakers of the seats in the vehicle. If the quantity of people in the vehicle is less than the people quantity threshold, but seats in which at least a part of passengers are seated are not provided with headrest speakers, the first noise suppression signal is output through all the speakers in the vehicle.

In another possible implementation of this application, the first noise suppression signal may merely be output through the headrest speaker of the seat in the vehicle or merely be output through all the speakers in the vehicle regardless of the quantity of people in the vehicle.

In another possible implementation of this application, different output manners may be used based on different seating positions of the passengers in the vehicle. For example, when all the seats in which the passengers are seated are provided with the headrest speakers, the first noise suppression signal is output through the headrest speakers of the seats in the vehicle. When seats in which at least a part of passengers are seated are not provided with headrest speakers, the first noise suppression signal is output through all the speakers in the vehicle.

According to a second aspect, this application provides a vehicle control method. The vehicle control method is applied to a vehicle, and is performed by a vehicle control unit of the vehicle. The method includes: when the vehicle meets a first condition, controlling a range extender of the vehicle to work; and when the range extender works, sending an active noise reduction instruction to an active noise reduction system of the vehicle, so that the active noise reduction system generates a first noise suppression signal based on an electricity generation rotational speed signal of the range extender, where the first noise suppression signal is used to suppress noise during working of the range extender.

Optionally, the first condition includes at least one of the following conditions:
a state of charge of the vehicle is lower than a first threshold, or a vehicle speed of the vehicle reaches a second threshold.

When the vehicle speed of the vehicle reaches the second threshold, wind noise and road noise that are generated when the vehicle travels suppress some of the noise during working of the range extender.

Because the range extender of the vehicle is a device that provides additional electric energy for the vehicle, the range extender of the vehicle starts to work when the state of charge of the vehicle is lower than the first threshold, for example, starts to work when the state of charge is lower than 80%. Certainly, 80% herein is merely an example, and the first threshold may alternatively be another value, for example, 70%. This is not limited in this application.

Because the noise during working of the range extender is large, the vehicle speed may be further considered when the range extender is started, and the range extender of the vehicle starts to work when the vehicle speed of the vehicle reaches the second threshold. When the vehicle speed of the vehicle reaches the second threshold, the wind noise and the road noise that are generated when the vehicle travels suppress some of the noise during working of the range extender.

In addition, the range extender in the vehicle may alternatively be started when the vehicle is in a sport mode or a ludicrous (Ludicrous) mode. In both modes, the range extender is constantly in a working state to provide stronger power output. The sport mode and the ludicrous mode are traveling modes with a stronger power, a larger output torque, and/or a larger acceleration.

In addition to separately using the state of charge and the vehicle speed as a start condition of the range extender, the state of charge and the vehicle speed may simultaneously be used as start conditions of the range extender. For example, the range extender may be started only when the state of charge is low and the vehicle speed is high. A reason for such a design is that the noise of the range extender is large, and when the vehicle speed is low, the noise of the range extender is more prominent and affects passenger experience, but when the vehicle speed is high, the wind noise and the road noise that are generated when the vehicle travels may suppress some of the noise during working of the range extender. In addition, when the vehicle speed is low, a requirement for additionally generating electricity is low, and when the vehicle speed is high, the requirement for additionally generating electricity is higher.

Based on the foregoing two aspects of reasons, in a possible implementation of this application, start of the range extender may be controlled in the following manner:
when the vehicle speed of the vehicle reaches the second threshold and the state of charge of the vehicle is lower than the first threshold, controlling the range extender of the vehicle to work.

In the foregoing steps, the vehicle speed of the vehicle may be a speed or an acceleration.

When the speed is used for representation, a speed of a vehicle speed sensor in the vehicle may be directly collected, to determine whether the second threshold of the speed is reached. For example, if the speed of the vehicle reaches 20 km/h, it is determined that the speed of the vehicle reaches the second threshold.

When the acceleration is used for representation, in addition to directly collecting an acceleration of an acceleration sensor in the vehicle, an indirect manner may be used to determine whether the acceleration reaches the second threshold. For example, if a throttle opening degree is greater than 95% for one second, it is determined that the acceleration of the vehicle reaches the second threshold.

That the throttle opening degree is greater than 95% for one second indicates that a user deeply steps on a throttle pedal. This may occur in scenarios in which a high acceleration needs to be provided, such as quick start and escape from a difficult situation. In these situations, the range extender is started, so that electricity with a higher power is provided to drive the vehicle.

The range extender of the vehicle includes two parts: an engine and a generator. Therefore, the controlling the range extender to work means controlling the engine and generator in the range extender to work.

In a possible implementation of this application, controlling the range extender of the vehicle to work includes:
obtaining a first rotational speed and a first torque that are used to control the range extender, where the first rotational speed and the first torque are a rotational speed and a torque that are selected based on a fuel-to-electricity conversion efficiency curve of the range extender, fuel-to-electricity conversion efficiency, on the fuel-to-electricity conversion efficiency curve, corresponding to the first rotational speed and the first torque is greater than a third threshold, the first rotational speed is not equal to a second rotational speed, and the second rotational speed is a rotational speed that causes resonance of the vehicle; and controlling a rotational speed of the generator in the range extender based on the first rotational speed, and control a torque of the engine in the range extender based on the first torque, to enable the range extender to work.

The second rotational speed is a range value, and the range value includes a rotational speed that causes the vehicle to be at a resonant peak and rotational speeds on two sides of the rotational speed at the resonant peak. A rotational speed at a non-resonant peak within the range value also causes clear resonance and therefore needs to be avoided to a greatest extent.

In a related technology, to prevent the noise from affecting ride experience, a range-extended vehicle usually has low electricity generation efficiency (fuel-to-electricity conversion efficiency) when the vehicle speed is low, and has high electricity generation efficiency when the vehicle speed is high. However, in this application, after the foregoing noise reduction solution is used, when the vehicle is in a fuel-saving mode, provided that the range extender is started, it is selected to generate electricity in high electricity generation efficiency regardless of the vehicle speed. In this way, fuel consumption of the vehicle can be reduced, and more energy is saved. In addition, in this control manner in which the rotational speed and the torque do not change with the vehicle speed, the range extender is in a stable working state. Therefore, the rotational speed signal does not change greatly, remains at a stable rotational speed, and fluctuates up and down within 1%, to ensure lower noise.

In a possible implementation of this application, the third threshold of the fuel-to-electricity conversion efficiency is 3.2, and 3.2 indicates that one liter of fuel may generate 3.2 degrees of electricity. In another implementation of this application, the third threshold of the fuel-to-electricity conversion efficiency may alternatively be another value.

On the fuel-to-electricity conversion efficiency curve, an interval in which the fuel-to-electricity conversion efficiency is greater than 3.2 corresponds to a torque range of 100 Nm to 120 Nm and a rotational speed range of 2400 rpm to 3200 rpm.

During selection of the torque and the rotational speed, the rotational speed is first selected from the rotational speed range (2400 rpm to 3200 rpm). During selection, a resonance point of the vehicle is avoided, such as resonance of a steering wheel and a resonance point of a foot pedal, to prevent resonance of the vehicle at the rotational speed. After a proper rotational speed is selected, a torque of a maximum efficiency point at this rotational speed is selected. Verification is performed on a real vehicle, and vibration and noise of the vehicle are tested. If the vibration and the noise are excessively large, the rotational speed and the torque are appropriately adjusted to reduce the vibration and the noise Finally, a relatively proper working point is obtained through optimization, that is, the first rotational speed and the first torque are obtained.

In another possible implementation of this application, when the range extender of the vehicle is controlled to work, different rotational speeds and torques may be selected at different vehicle speeds for control. For this implementation, details are not described in this application.

When the first torque and the first rotational speed are used to control the range extender to work, an actual rotational speed of the range extender may be different from the first rotational speed. Therefore, the rotational speed of the range extender needs to be collected by using a sensor, to obtain the electricity generation rotational speed signal.

For example, a signal output by the sensor that detects the rotational speed of the generator in the range extender is collected every 10 ms, to obtain a sequence of rotational speeds of the generator, that is, the electricity generation rotational speed signal, where the electricity generation rotational speed signal is a time-domain signal.

During noise suppression, the active noise reduction system may process the electricity generation rotational speed signal at intervals, then output the noise suppression signal, and repeat the foregoing process.

Optionally, the method further includes: when the vehicle meets a second condition, controlling the range extender of the vehicle to stop working.

The second condition includes at least one of the following:
the state of charge of the vehicle is not lower than the first threshold, or the vehicle speed of the vehicle is lower than a fourth threshold.

For example, when the state of charge is not lower than 80%, the range extender is controlled to stop working.

The fourth threshold may be less than the second threshold.

For example, the fourth threshold may be 15 km/h. That is, when the vehicle speed of the vehicle is lower than 15 km/h, the range extender is controlled to stop working.

During determining of an occasion of starting the range extender by the vehicle, the second threshold of the vehicle speed is 20 km/h, and during determining of an occasion of stopping the range extender by the vehicle, the threshold of the vehicle speed is 15 km/h. A hysteresis manner is used in the determining condition to prevent frequent start and stop of the range extender. Especially when the vehicle is in a congested road, and the vehicle speed remains around 20 km/h, if a vehicle speed for entry and a vehicle speed for exit remain consistent at 20 km/h, a range extender system will be frequently started and stopped. Sounds of starting and stopping the range extender are much larger than a sound of stable running. Therefore, great noise is generated, user experience is poor, and a service life of the range extender is affected. In this application, the hysteresis manner is used in the determining condition, so that the noise caused by frequent start and stop is avoided, and the service life of the range extender is protected.

Optionally, the method further includes: when the state of charge of the vehicle is lower than a fifth threshold, controlling the vehicle to exit the fuel-saving mode, and performing electricity generation according to a power requirement of the vehicle, to control the state of charge to be balanced at a sixth threshold. The sixth threshold may be 20% or another value. This is not limited in this application.

For example, the fifth threshold may be 15%.

When the state of charge is high, the fuel-to-electricity conversion efficiency is ensured, that is, the vehicle works in the fuel-saving mode. When the state of charge is low, if the fuel-saving mode continues to be used, the state of charge may be insufficient to meet a requirement of the vehicle. In this case, the vehicle needs to exit the fuel-saving mode, to ensure electricity supply of the vehicle.

According to a third aspect, this application provides a vehicle control apparatus. The apparatus includes:
an obtaining unit, configured to: when a range extender of a vehicle works, obtain an electricity generation rotational speed signal during working of the range extender;
a processing unit, configured to generate a first noise suppression signal based on the electricity generation rotational speed signal, where the first noise suppression signal is used to suppress noise during working of the range extender; and
an output unit, configured to output the first noise suppression signal through a speaker in the vehicle.

Optionally, the processing unit is configured to: convert the electricity generation rotational speed signal into a frequency-domain signal through fast Fourier transform; perform frequency multiplication processing on the frequency-domain signal to obtain a frequency multiplication signal; perform phase inversion processing on the frequency-domain signal and the frequency multiplication signal; and convert, through inverse fast Fourier transform, the frequency-domain signal and the frequency multiplication signal that have undergone phase inversion processing into time-domain signals, to obtain the first noise suppression signal.

Optionally, the processing unit is configured to: obtain a quantity of cylinders of an engine in the range extender; determine a frequency multiplication order based on the quantity of cylinders of the engine; and perform frequency multiplication processing on the frequency-domain signal based on the frequency multiplication order to obtain the frequency multiplication signal.

Optionally, the processing unit is configured to: when the quantity of cylinders of the engine is 2 or 4, determine that the frequency multiplication order is 2 and 4; or when the quantity of cylinders of the engine is 3, determine that the frequency multiplication order is 3 and 6.

Optionally, the obtaining unit is further configured to obtain a noise signal collected by a microphone in the vehicle.

The processing unit is further configured to: calculate noise suppression effect based on the noise signal; perform phase inversion processing by using a first phase value and a second phase value as a phase of a first frequency-domain signal and a phase of a first frequency multiplication signal respectively; and when the noise suppression effect meets a condition after the first phase value and the second phase value are used to perform phase inversion processing, perform phase inversion processing by using the first phase value and the second phase value as a phase of a second frequency-domain signal and a phase of a second frequency multiplication signal respectively.

The second frequency-domain signal and the first frequency-domain signal are frequency-domain signals obtained through conversion of two consecutive electricity generation rotational speed signals, and the second frequency multiplication signal is a frequency multiplication signal of the second frequency-domain signal.

Optionally, the processing unit is further configured to: when the noise suppression effect does not meet the condition after the first phase value and the second phase value are used to perform phase inversion processing, adjust the first phase value and the second phase value to obtain a third phase value and a fourth phase value, and perform phase inversion processing by using the third phase value and the fourth phase value as the phase of the second frequency-domain signal and the phase of the second frequency multiplication signal respectively.

Optionally, the output unit is configured to: when a quantity of people in the vehicle is less than a people quantity threshold, output the first noise suppression signal through a headrest speaker of a seat in the vehicle; or when a quantity of people in the vehicle is not less than a people quantity threshold, output the first noise suppression signal through all speakers in the vehicle.

According to a fourth aspect, a vehicle control apparatus is provided. The apparatus includes:
a control unit, configured to: when a vehicle meets a first condition, control a range extender of the vehicle to work; and
a sending unit, configured to: when the range extender works, send an active noise reduction instruction to an active noise reduction system of the vehicle, so that the active noise reduction system generates a first noise suppression signal based on an electricity generation rotational speed signal of the range extender, where the first noise suppression signal is used to suppress noise during working of the range extender.

Optionally, the first condition includes at least one of the following conditions:
a state of charge of the vehicle is lower than a first threshold, or a vehicle speed of the vehicle reaches a second threshold.

When the vehicle speed of the vehicle reaches the second threshold, wind noise and road noise that are generated when the vehicle travels suppress some of the noise during working of the range extender.

Optionally, the control unit is configured to: obtain a first rotational speed and a first torque that are used to control the range extender, where the first rotational speed and the first torque are a rotational speed and a torque that are selected based on a fuel-to-electricity conversion efficiency curve of the range extender, fuel-to-electricity conversion efficiency, on the fuel-to-electricity conversion efficiency curve, corresponding to the first rotational speed and the first torque is greater than a third threshold, the first rotational speed is not equal to a second rotational speed, and the second rotational speed is a rotational speed that causes resonance of the vehicle; and control a rotational speed of a generator in the range extender based on the first rotational speed, and control a torque of an engine in the range extender based on the first torque, to enable the range extender to work.

Optionally, the control unit is further configured to: when the vehicle meets a second condition, control the range extender of the vehicle to stop working.

The second condition includes at least one of the following:
the state of charge of the vehicle is not lower than the first threshold, or the vehicle speed of the vehicle is lower than a fourth threshold.

According to a fifth aspect, an electronic device is provided. The electronic device includes a processor and a memory. The memory is configured to store a software program and a module. The processor runs or executes the software program and/or the module stored in the memory to implement the method in the first aspect or any one of the possible implementations of the first aspect, or implement the method in the second aspect or any one of the possible implementations of the second aspect.

Optionally, there are one or more processors, and there are one or more memories.

Optionally, the memory and the processor may be integrated together, or the memory and the processor may be separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to a sixth aspect, a computer program product is provided. The computer program product includes computer program code. When the computer program code is run by a computer, the computer is enabled to perform the method in the first aspect or any one of the possible implementations of the first aspect, or perform the method in the second aspect or any one of the possible implementations of the second aspect.

According to a seventh aspect, this application provides a computer-readable storage medium. The computer-readable storage medium is configured to store program code executed by a processor, and the program code is used to implement the method in the first aspect or any one of the possible implementations of the first aspect, or implement the method in the second aspect or any one of the possible implementations of the second aspect.

According to an eighth aspect, a chip is provided, including a processor. The processor is configured to: invoke, from a memory, instructions stored in the memory, and run the instructions, to enable a communication device in which the chip is installed to perform the method in the first aspect or any one of the possible implementations of the first aspect, or perform the method in the second aspect or any one of the possible implementations of the second aspect.

According to a ninth aspect, another chip is provided. The another chip includes an input interface, an output interface, a processor, and a memory. The input interface, the output interface, the processor, and the memory are connected through an internal connection path. The processor is configured to execute code in the memory. When the code is executed, the processor is configured to perform the method in the first aspect or any one of the possible implementations of the first aspect, or perform the method in the second aspect or any one of the possible implementations of the second aspect.

According to a tenth aspect, a vehicle is provided. The vehicle includes the vehicle control apparatus in the third aspect or any one of the possible implementations of the third aspect, or the vehicle control apparatus in the fourth aspect or any one of the possible implementations of the fourth aspect.

According to an eleventh aspect, a vehicle control system is provided, including a vehicle control unit, an active noise reduction system, and a range extender system.

The vehicle control unit is configured to: when a vehicle meets a first condition, control a range extender in the range extender system to work; and when the range extender works, send an active noise reduction instruction to the active noise reduction system of the vehicle.

The active noise reduction system is configured to: when the range extender of the vehicle works, obtain an electricity generation rotational speed signal of the range extender; when receiving the active noise reduction instruction, generate a first noise suppression signal based on the electricity generation rotational speed signal, where the first noise suppression signal is used to suppress noise during working of the range extender; and output the first noise suppression signal through a speaker in the vehicle.

### BRIEF DESCRIPTION OF DRAWINGS

FIG. 1 is a diagram of a system architecture according to an embodiment of this application;
FIG. 2 is a diagram of a system architecture according to an embodiment of this application;
FIG. 3 is a flowchart of a vehicle control method according to an embodiment of this application;
FIG. 4 is a flowchart of a vehicle control method according to an embodiment of this application;
FIG. 5 is a flowchart of a vehicle control method according to an embodiment of this application;
FIG. 6 is a diagram of a vehicle control interface according to an embodiment of this application;
FIG. 7 is a block diagram of a vehicle control apparatus according to an embodiment of this application;
FIG. 8 is a block diagram of a vehicle control apparatus according to an embodiment of this application; and
FIG. 9 is a diagram of a structure of a device according to an example embodiment of this application.

### DESCRIPTION OF EMBODIMENTS

To make the objectives, technical solutions, and advantages of this application clearer, the following further describes the implementations of this application in detail with reference to the accompanying drawings.

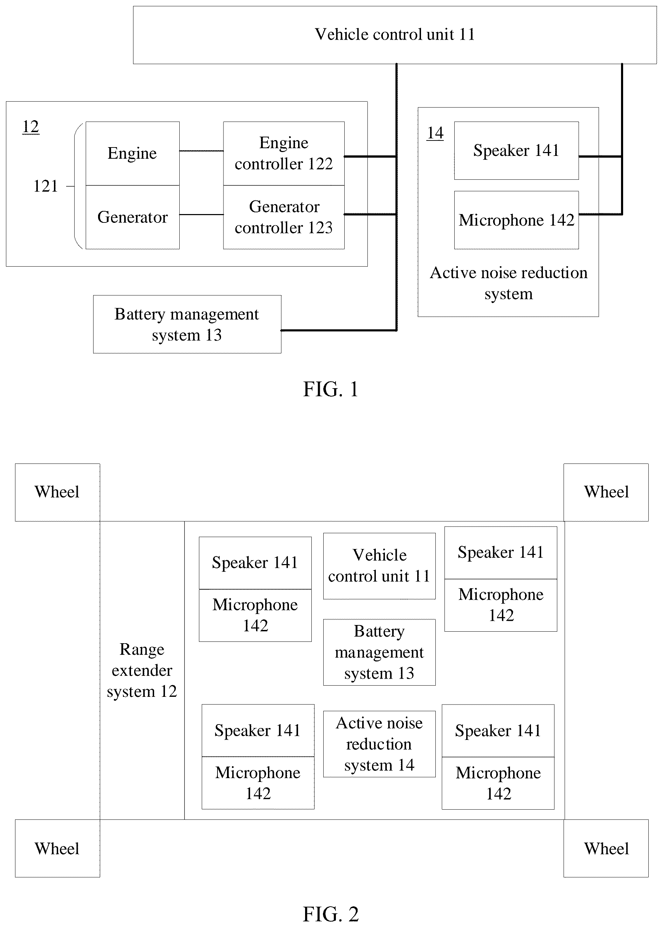

To facilitate understanding of the technical solutions provided in embodiments of this application, a system architecture of this application is first described with reference to FIG. 1 and FIG. 2.

FIG. 1 is a diagram of a system architecture according to an embodiment of this application. Refer to FIG. 1. The system architecture includes a vehicle control unit 11, a range extender system 12, a battery management system 13, and an active noise reduction system 14.

The range extender system 12 includes a range extender 121, an engine controller 122, and a generator controller 123. The range extender 121 includes an engine and a generator. The engine is controlled by the engine controller 122, and the generator is controlled by the generator controller 123. The active noise reduction system 14 includes speakers 141 and microphones 142. The speakers 141 are responsible for outputting a noise suppression signal, and the microphones 142 are responsible for collecting noise in a vehicle, to evaluate noise reduction effect. The speakers 141 include a sound-emitting speaker, a headrest speaker, and the like. The active noise reduction system 14 further includes a processing module configured to generate the noise suppression signal.

The vehicle control unit 11 is connected to the range extender system 12, the battery management system 13, and the active noise reduction system 14 through a bus in the vehicle or a network in the vehicle.

FIG. 2 is a diagram of distribution of a system architecture according to an embodiment of this application. As shown in FIG. 2, a range extender system 12 is provided at front of a vehicle. Speakers and microphones of the active noise reduction system 14 are disposed in a cabin, and a plurality of groups are spaced apart. A battery management system 13 and a vehicle control unit 11 are also disposed in the cabin.

In embodiments of this application, the foregoing system architecture belongs to the vehicle. In addition to a vehicle traveling on a road, the vehicle herein may further include a vehicle in another form such as an uncrewed aerial vehicle or an aircraft. A form of the vehicle is not limited in this application.

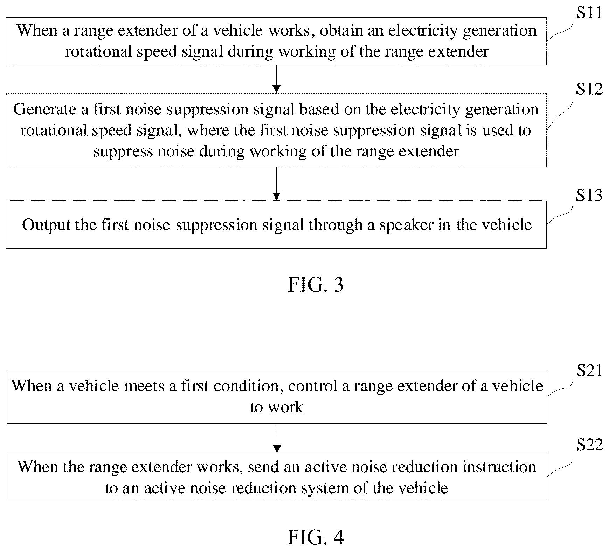

FIG. 3 is a flowchart of a vehicle control method according to an embodiment of this application. The method is applied to the foregoing vehicle. The method may be performed by the active noise reduction system in the system architecture shown in FIG. 1 and FIG. 2. As shown in FIG. 3, the method includes the following steps.

S11: When a range extender of the vehicle works, obtain an electricity generation rotational speed signal during working of the range extender.

For example, a range extender system collects, every 10 ms, a signal output by a sensor that detects a rotational speed of a generator in the range extender, to obtain a sequence of rotational speeds of the generator, that is, the electricity generation rotational speed signal, where the electricity generation rotational speed signal is a time-domain signal. The range extender system sends the electricity generation rotational speed signal to the active noise reduction system, so that the active noise reduction system obtains the electricity generation rotational speed signal during working of the range extender. Alternatively, the range extender system sends the electricity generation rotational speed signal to the vehicle control unit, and then the vehicle control unit sends the electricity generation rotational speed signal to the active noise reduction system.

S12: Generate a first noise suppression signal based on the electricity generation rotational speed signal, where the first noise suppression signal is used to suppress noise during working of the range extender.

S13: Output the first noise suppression signal through a speaker in the vehicle.

In the method provided in this application, when the range extender works, the noise suppression signal is generated based on the electricity generation rotational speed signal during working of the range extender, and then the noise suppression signal is output through the speaker in the vehicle to perform noise reduction. The sensor is used in the range extender to collect the electricity generation rotational speed signal with a delay far less than a delay of collecting the noise by a microphone. A collection speed of a photoelectric or mechanical sensor is faster than that of sound collection. In addition, a path for collecting a rotational speed of the range extender by the sensor is shorter than a path for collecting the noise by the microphone. Therefore, the delay is low. In addition, collection precision of collecting the electricity generation rotational speed signal by using the sensor is high. Because the collection delay is low and the collection precision is high, the noise suppression signal generated based on the electricity generation rotational speed signal has a small delay and high precision, so that noise suppression effect of the range extender can be ensured.

FIG. 4 is a flowchart of a vehicle control method according to an embodiment of this application. The method is applied to the foregoing vehicle. The method may be performed by the vehicle control unit in the system architecture shown in FIG. 1 and FIG. 2. As shown in FIG. 4, the method includes the following steps.

S21: When the vehicle meets a first condition, control a range extender of the vehicle to work.

In an implementation of this application, the vehicle may have a plurality of conditions for starting the range extender.

For example, when a state of charge of the vehicle is lower than a first threshold, the range extender of the vehicle is controlled to work. Because the range extender of the vehicle is a device that provides additional electric energy for the vehicle, the range extender of the vehicle starts to work when the state of charge of the vehicle is lower than the first threshold, for example, starts to work when the state of charge is lower than 80%. Certainly, 80% herein is merely an example, and the first threshold may alternatively be another value, for example, 70%. This is not limited in this application.

For another example, when a vehicle speed of the vehicle reaches a second threshold, the range extender of the vehicle is controlled to work. Because noise during working of the range extender is high, the vehicle speed of the vehicle may be further considered when the range extender is started.

In addition to separately using the state of charge and the vehicle speed as a start condition of the range extender, the state of charge and the vehicle speed may simultaneously be used as start conditions of the range extender.

S22: When the range extender works, send an active noise reduction instruction to an active noise reduction system of the vehicle, so that the active noise reduction system generates a first noise suppression signal based on an electricity generation rotational speed signal of the range extender, where the first noise suppression signal is used to suppress the noise during working of the range extender.

The active noise reduction instruction is sent to the active noise reduction system when the vehicle is started, so that the active noise reduction system generates the first noise suppression signal based on the electricity generation rotational speed signal, where the first noise suppression signal is used to suppress the noise during working of the range extender. The noise suppression signal has a small delay and high precision, so that noise suppression effect of the range extender can be ensured.

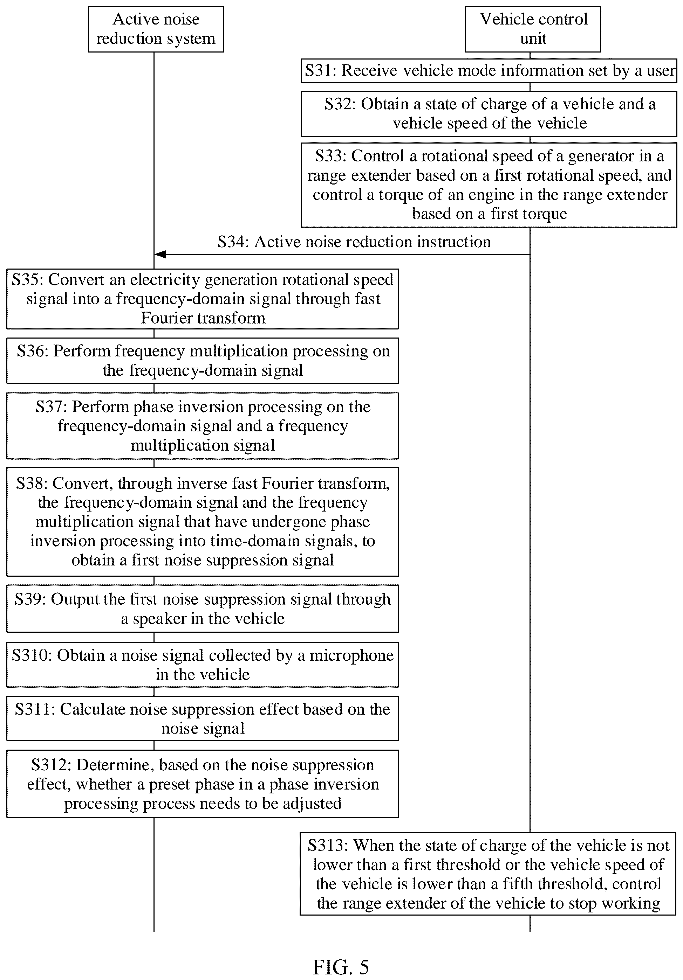

FIG. 5 is a flowchart of a vehicle control method according to an embodiment of this application. The method is applied to the foregoing vehicle. The method may be jointly performed by the vehicle control unit and the active noise reduction system in the system architecture shown in FIG. 1 and FIG. 2. As shown in FIG. 5, the method includes the following steps.

S31: The vehicle control unit receives vehicle mode information set by a user.

After the vehicle is started, the vehicle may receive the vehicle mode information entered by the user through a vehicle control interface.

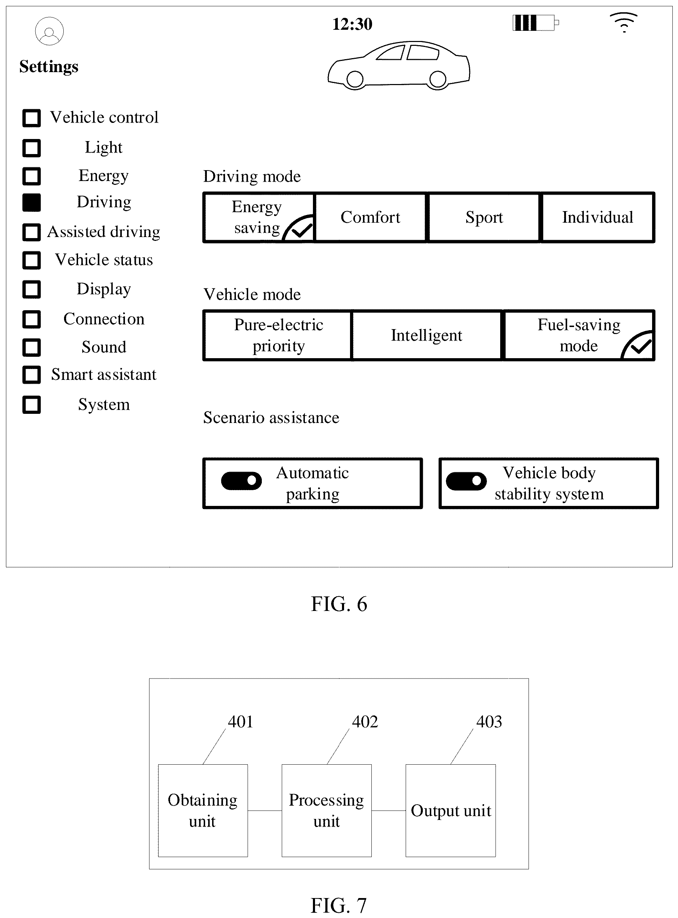

FIG. 6 is a diagram of a vehicle control interface according to an embodiment of this application. Refer to FIG. 6. Vehicle modes include a fuel-saving mode and other modes (for example, a pure-electric mode and an intelligent mode). A user may select the vehicle mode through the interface. For example, the fuel-saving mode is selected in FIG. 6.

The fuel-saving mode is for users on long-distance trips and users who prefer fuel. After this mode is enabled, fuel consumption may be reduced and vehicle use efficiency can be improved. The pure-electric mode means that electricity is preferentially used for traveling, and electricity generation by using fuel is not started until the state of charge is low (for example, 20%). The intelligent mode means that the vehicle intelligently controls work of a generator in the vehicle based on a state of charge and a road condition.

Refer to FIG. 6. In addition to the vehicle modes, driving options such as driving modes (for example, an energy-saving driving mode (where a performance indicator is lowered to reduce fuel consumption), a comfort driving mode (where the performance indicator is normal to improve ride comfort), a sport driving mode (where the performance indicator is strong to fully enjoy driving fun), and an individual driving mode (where the performance indicator is individually set to offer greater flexibility and variety)) and scenario assistance (automatic parking, a vehicle body stability system, and the like) may be further configured on the vehicle control interface. In addition to the driving options, the vehicle control interface further includes options, such as vehicle control, light, energy, assisted driving, vehicle status, display, connection, sound, smart assistant, and system, for configuration. In addition, the vehicle control interface further includes a user center, a time display interface, a state of charge display interface, a network status display interface, and the like. Details of the vehicle control interface are not described in this application.

S32: The vehicle control unit obtains a state of charge of the vehicle and a vehicle speed of the vehicle.

The state of charge is obtained by using a battery management system, and the vehicle speed is obtained by using a vehicle speed sensor or another sensor in the vehicle.

S33: When the vehicle speed of the vehicle reaches a second threshold and the state of charge of the vehicle is lower than a first threshold, the vehicle control unit controls a rotational speed of a generator in a range extender based on a first rotational speed, and controls a torque of an engine in the range extender based on a first torque, to enable the range extender to work.

The range extender is not started when at least one of the following is not satisfied: The vehicle speed of the vehicle reaches the second threshold and the state of charge of the vehicle is lower than the first threshold.

For example, the first threshold may be 80%, and the second threshold may be 20 km/h.

When the vehicle speed of the vehicle reaches the second threshold, wind noise and road noise that are generated when the vehicle travels suppress some of noise during working of the range extender, to avoid excessively prominent noise of the range extender and facilitate subsequent suppression of the noise of the range extender.

In different vehicle modes, manners of controlling the range extender to work are different.

For example, when the vehicle is in a fuel-saving mode, the first rotational speed and the first torque with high fuel-to-electricity conversion efficiency are used to control the range extender.

The first rotational speed and the first torque with the high fuel-to-electricity conversion efficiency may be determined in advance, and stored in the vehicle control unit of the vehicle. When the vehicle is in the fuel-saving mode and meets a start condition of the range extender, the stored first rotational speed and first torque are directly invoked.

Alternatively, the first rotational speed and the first torque may be determined and obtained in real time when the vehicle is in the fuel-saving mode and meets a start condition of the range extender.

However, regardless of which of the foregoing implementations is used, the first rotational speed and the first torque are determined in a same manner, which includes the following implementation:
obtaining the first rotational speed and the first torque that are used to control the range extender, where the first rotational speed and the first torque are a rotational speed and a torque that are selected based on a fuel-to-electricity conversion efficiency curve of the range extender, fuel-to-electricity conversion efficiency, on the fuel-to-electricity conversion efficiency curve, corresponding to the first rotational speed and the first torque is greater than a third threshold, the first rotational speed is not equal to a second rotational speed, and the second rotational speed is a rotational speed that causes resonance of the vehicle.

For another example, when the vehicle is in another mode, the rotational speed and the torque may be selected according to a power requirement of the vehicle to control the range extender to work.

In step S33, after determining the rotational speed and the torque, the vehicle control unit in the vehicle generates an electricity generation instruction including the rotational speed and the torque, and sends the electricity generation instruction to a generator controller and an engine controller. The generator controller and the engine controller respectively control the generator and the engine in the range extender, to implement electricity generation control on the range extender.

Because in different vehicle modes, the manners of controlling the range extender to work are different, the method may further include:
when the state of charge of the vehicle is lower than 15%, controlling the vehicle to exit the fuel-saving mode.

In other words, the vehicle can work in the fuel-saving mode when the state of charge ranges from 15% to 80%.

In the fuel-saving mode, powers required by the vehicle at a low speed, a medium speed, and a high speed are different, but a working power of the range extender remains unchanged. The range extender does not dynamically adjust electricity generation based on a required power of the vehicle. Therefore, the state of charge increases at a low speed and decreases at a high speed. Dynamic floating adjustment (from 15% to 80%) of the state of charge of the vehicle is supported, so that a buffer function of a battery pack is used to a maximum extent, the fuel-to-electricity conversion efficiency of the vehicle is improved, and fuel consumption of the vehicle is reduced.

When the state of charge is high, the fuel-to-electricity conversion efficiency is ensured, that is, the vehicle works in the fuel-saving mode. When the state of charge is low, if the fuel-saving mode continues to be used, the state of charge may be insufficient to meet a requirement of the vehicle. In this case, the vehicle needs to exit the fuel-saving mode.

After the range extender exits the fuel-saving mode, the range extender generates electricity according to the power requirement of the vehicle to control the state of charge to be balanced at a sixth threshold. The sixth threshold may be 20% or another value. This is not limited in this application.

Herein, that the state of charge is balanced at 20% means that an electricity generation power of the range extender is controlled based on the required power of the vehicle, so that the state of charge is maintained at 20%. For example, in a high-speed scenario, the vehicle needs a drive power of 40 kW. In this case, the range extender is controlled to work at a working point of 40 kW. In a traffic congestion and slow-moving scenario, the vehicle needs a drive power of 10 kW. In this case, the range extender is controlled to work at a working point of 10 kW. In this strategy, the power of the range extender is adjusted in real time according to the requirement of the vehicle.

S34: The vehicle control unit sends an active noise reduction instruction to the active noise reduction system when the range extender of the vehicle works. The active noise reduction system receives the active noise reduction instruction.

S35: When receiving the active noise reduction instruction, the active noise reduction system converts an electricity generation rotational speed signal into a frequency-domain signal through fast Fourier transform.

The active noise reduction system obtains the electricity generation rotational speed signal in the following manner:
The electricity generation rotational speed signal during working of the range extender may be sent by a range extender system or the vehicle control unit to the active noise reduction system. For example, the vehicle control unit sends the active noise reduction instruction to the active noise reduction system, where the instruction carries the electricity generation rotational speed signal.

When the first torque and the first rotational speed are used to control the range extender to work, an actual rotational speed of the range extender may be different from the first rotational speed. Therefore, the rotational speed of the range extender needs to be collected by using a sensor, to obtain the electricity generation rotational speed signal. For example, a resolver sensor is installed on the generator of the range extender to collect the rotational speed of the generator.

For example, the range extender system collects, every 10 ms, a signal output by the sensor, to obtain a sequence of rotational speeds of the generator, that is, the electricity generation rotational speed signal, where the electricity generation rotational speed signal is a time-domain signal. The range extender system sends the collected electricity generation rotational speed signal to the vehicle control unit and the active noise reduction system.

S36: The active noise reduction system performs frequency multiplication processing on the frequency-domain signal to obtain a frequency multiplication signal.

In the foregoing processing process, a frequency multiplication order of the frequency multiplication signal is related to a structure of the vehicle. For example, the frequency multiplication order of the frequency multiplication signal is related to a quantity of cylinders of the engine in the range extender of the vehicle.

Therefore, the step of performing frequency multiplication processing on the frequency-domain signal to obtain the frequency multiplication signal may include:
obtaining the quantity of cylinders of the engine in the range extender; determining the frequency multiplication order based on the quantity of cylinders of the engine; and performing frequency multiplication processing on the frequency-domain signal based on the frequency multiplication order to obtain the frequency multiplication signal.

Herein, the quantity of cylinders of the engine may be pre-stored in a controller of the vehicle, to facilitate calculation of the frequency multiplication signal.

For example, when the quantity of cylinders of the engine is 2 or 4, it is determined that the frequency multiplication order is 2 and 4.

For example, when the quantity of cylinders of the engine is 3, it is determined that the frequency multiplication order is 3 and 6.

In the foregoing example, the quantity of cylinders ranges from 2 to 4, which is common configuration of a quantity of cylinders in vehicles. In another implementation, the quantity of cylinders may alternatively be another value, and the frequency multiplication order is usually the quantity of cylinders, twice the quantity of cylinders, 1/2 of the quantity of cylinders, or the like.

S37: The active noise reduction system performs phase inversion processing on the frequency-domain signal and the frequency multiplication signal.

Phase inversion processing means shifting a phase difference by 180 degrees, so that an amplitude changes from a to -a. The resulting noise suppression signal may neutralize the noise, to implement noise suppression.

S38: The active noise reduction system converts, through inverse fast Fourier transform, the frequency-domain signal and the frequency multiplication signal that have undergone phase inversion processing into time-domain signals, to obtain a first noise suppression signal.

The first noise suppression signal herein includes a time-domain signal converted from the frequency-domain signal that has undergone phase inversion processing, and a time-domain signal converted from the frequency multiplication signal that has undergone phase inversion processing.

S39: The active noise reduction system outputs the first noise suppression signal through a speaker in the vehicle.

For example, when a quantity of people in the vehicle is less than a people quantity threshold, the first noise suppression signal is output through a headrest speaker of a seat in the vehicle; or
when a quantity of people in the vehicle is not less than a people quantity threshold, the first noise suppression signal is output through all speakers in the vehicle.

Output of the noise suppression signal may affect music play in the vehicle. If the quantity of people in the vehicle is small, the people are usually seated in positions such as a driver's seat or a front passenger seat. The seats are provided with headrest speakers. In this case, noise suppression is output through the headrest speakers. The passenger can obtain noise suppression effect and the noise is avoided. In addition, music play of another speaker is not affected. When there are a large quantity of passengers, the headrest speaker may not provide comprehensive coverage, noise suppression is output through all the speakers in the vehicle, to ensure the noise suppression effect to a greatest extent. In addition, only the quantity of people is considered herein, and a position of the passenger is not considered. This is a simplified determining manner, and saves vehicle control resources.

For example, the quantity of people in the vehicle may be determined based on data collected by a seat occupation sensor, a camera, or the like.

For example, the people quantity threshold may be 2 to 4, for example, 3.

Optionally, in this implementation, in addition to the quantity of passengers in the vehicle, the position of the passenger may be further considered. For example, when the quantity of people in the vehicle is less than the people quantity threshold, it may be further determined whether a seat in which each passenger is seated is provided with a headrest speaker. If the quantity of people in the vehicle is less than the people quantity threshold, and all seats in which the passengers are seated are provided with headrest speakers, the first noise suppression signal is output through the headrest speakers of the seats in the vehicle. If the quantity of people in the vehicle is less than the people quantity threshold, but seats in which at least a part of passengers are seated are not provided with headrest speakers, the first noise suppression signal is output through all the speakers in the vehicle.

In another possible implementation of this application, the first noise suppression signal may merely be output through the headrest speaker of the seat in the vehicle or merely be output through all the speakers in the vehicle regardless of the quantity of people in the vehicle.

In another possible implementation of this application, different output manners may be used based on different seating positions of the passengers in the vehicle. For example, when all the seats in which the passengers are seated are provided with the headrest speakers, the first noise suppression signal is output through the headrest speakers of the seats in the vehicle. When seats in which at least a part of passengers are seated are not provided with headrest speakers, the first noise suppression signal is output through all the speakers in the vehicle.

S310: The active noise reduction system obtains a noise signal collected by a microphone in the vehicle.

The noise signal in the vehicle is collected by using a plurality of microphones disposed in the vehicle.

S311: The active noise reduction system calculates the noise suppression effect based on the noise signal.

The analysis herein may be analyzing whether the noise in the vehicle is lower than an expected noise value, to determine noise reduction effect.

For example, an energy spectrum of the noise signal is calculated, to determine whether an amplitude and/or energy of the noise signal are/is lower than a threshold. If the amplitude and/or the energy of the noise signal are/is lower than the threshold, it is determined that the noise suppression effect meets a condition. If the amplitude and/or the energy of the noise signal are/is not lower than the threshold, it is determined that the noise suppression effect does not meet a condition.

S312: The active noise reduction system determines, based on the noise suppression effect, whether a preset phase in a phase inversion processing process needs to be adjusted.

For example, phase inversion processing is performed by using a first phase value and a second phase value as a phase of a first frequency-domain signal and a phase of a first frequency multiplication signal respectively. When the noise suppression effect meets the condition after the first phase value and the second phase value are used to perform phase inversion processing, phase inversion processing is performed by using the first phase value and the second phase value as a phase of a second frequency-domain signal and a phase of a second frequency multiplication signal respectively, where the second frequency-domain signal and the first frequency-domain signal are frequency-domain signals obtained through conversion of two consecutive electricity generation rotational speed signals, and the second frequency multiplication signal is a frequency multiplication signal of the second frequency-domain signal.

The first frequency-domain signal and the second frequency-domain signal are frequency-domain signals corresponding to the two consecutive rotational speed signals.

The first phase value and the second phase value herein are initial phases assumed for the frequency-domain signal and the frequency multiplication signal, for example, initial values obtained through simulation learning. The first phase value and the second phase value may be the same or may be different. If the noise suppression effect of the output noise suppression signal meets the condition after phase inversion processing is performed based on the foregoing phases, it indicates that the assumed first phase value and second phase value are reasonable, and no adjustment is required. In processing of next periodicity, the first phase value and the second phase value continue to be used.

If the noise suppression effect of the output noise suppression signal does not meet the condition, that is, when the noise suppression effect does not meet the condition after the first phase value and the second phase value are used to perform phase inversion processing, the first phase value and the second phase value are adjusted to obtain a third phase value and a fourth phase value, and phase inversion processing is performed by using the third phase value and the fourth phase value as the phase of the second frequency-domain signal and the phase of the second frequency multiplication signal respectively.

That the first phase value and the second phase value are adjusted to obtain a third phase value and a fourth phase value may include: increasing or decreasing the first phase value and the second phase value based on a preset step to obtain the third phase value and the fourth phase value.

There may be a plurality of frequency multiplication signals (for example, frequency doubling and frequency quadrupling, or frequency tripling and frequency sextupling). Therefore, there may also be a plurality of corresponding second phase values, and second phase values of different frequency multiplication signals may be the same or may be different.

Because phase values of the frequency-domain signal and the plurality of frequency multiplication signals are all assumed values, when the phase values are adjusted, a phase value of one signal may be adjusted each time, and another phase value is adjusted after adjustment of an unreasonable phase value is completed. In this manner, a case in which a combination of phase values with best noise reduction effect is prone to being missed due to adjustment of a plurality of phase values at the same time is avoided.

When phase inversion is performed on the frequency-domain signal and the frequency multiplication signal, because the initial phases of the frequency-domain signal and the frequency multiplication signal are unknown, phase inversion processing cannot be directly performed. In this application, phase inversion processing is performed in the following manner: First, the phase value of the frequency-domain signal and the phase value of the frequency multiplication signal are assumed. Then, processing is performed based on the assumed phase values. Then, it is determined, based on processed noise feedback, whether the assumption is reasonable. If the assumption is reasonable, the assumed phase values are used subsequently to perform noise reduction processing in a current vehicle traveling process. If the assumption is unreasonable, the assumed phase values continue to be adjusted, and noise reduction processing is performed again, to finally find proper phase values through iteration.

S313: When the state of charge of the vehicle is not lower than the first threshold or the vehicle speed of the vehicle is lower than a fourth threshold, the vehicle control unit controls the range extender of the vehicle to stop working.

For example, when the state of charge is not lower than 80%, the range extender is controlled to stop working. In addition, in this case, the vehicle may be switched from the fuel-saving mode to a pure-electric mode for traveling.

For example, the fourth threshold may be 15 km/h. That is, when the vehicle speed of the vehicle is lower than 15 km/h, the range extender is controlled to stop working. If in this case, the state of charge is lower than 15% and cannot meet a traveling requirement, the vehicle may exit the fuel-saving mode. Electricity is generated according to the power requirement of the vehicle to control the state of charge to be balanced at the sixth threshold. The sixth threshold may be 20% or another value. This is not limited in this application.

During determining of an occasion of starting the range extender by the vehicle, the threshold of the vehicle speed is 20 km/h, and during determining of an occasion of stopping the range extender by the vehicle, the threshold of the vehicle speed is 15 km/h. A hysteresis manner is used in the determining condition to prevent frequent start and stop of the range extender. Especially when the vehicle is in a congested road, and the vehicle speed remains around 20 km/h, if a vehicle speed for entry and a vehicle speed for exit remain consistent at 20 km/h, the range extender system will be frequently started and stopped. Sounds of starting and stopping the range extender are much larger than a sound of stable running. Therefore, great noise is generated, user experience is poor, and a service life of the range extender is affected. In this application, the hysteresis manner is used in the determining condition, so that the noise caused by frequent start and stop is avoided, and the service life of the range extender is protected.

After the range extender stops working, step S32 is performed again to start the range extender again when the start condition of the range extender is met.

In this embodiment of this application, when working in the fuel-saving mode, the range extender does not generate electricity according to the required power of the vehicle, and only selects high fuel-to-electricity conversion efficiency for electricity generation. Dynamic floating adjustment (from 15% to 80%) of the state of charge of the vehicle is supported, so that a buffer function of the battery pack is used to a maximum extent, and the range extender stably works in a high-efficiency area. The fuel-to-electricity conversion efficiency of the vehicle is improved, fuel consumption of the vehicle is reduced, which is reduced by 0.42 L/100 km compared with world light vehicle test cycle (world light vehicle test cycle, WLTC) fuel consumption of a vehicle in a related technology, and WLTC endurance of the vehicle is improved by 55 km. The range extender works at one or more specific frequencies. For a noise signal of a specific electricity generation frequency of the range extender, noise of the specific electricity generation frequency of the range extender is actively suppressed to reduce noise of the vehicle. According to a comparison between noise data tested in a passenger cabin, the noise may be reduced by up to 12 dBA, and the noise reduction effect is clear.

FIG. 7 is a block diagram of a vehicle control apparatus according to an embodiment of this application. The vehicle control apparatus may be implemented as all or a part of an active noise reduction system by using software, hardware, or a combination thereof. The vehicle control apparatus may include an obtaining unit 401, a processing unit 402, and an output unit 403.

The obtaining unit 401 is configured to: when a range extender of a vehicle works, obtain an electricity generation rotational speed signal during working of the range extender.

The processing unit 402 is configured to generate a first noise suppression signal based on the electricity generation rotational speed signal, where the first noise suppression signal is used to suppress noise during working of the range extender.

The output unit 403 is configured to output the first noise suppression signal through a speaker in the vehicle.

Optionally, the processing unit 402 is configured to: convert the electricity generation rotational speed signal into a frequency-domain signal through fast Fourier transform; perform frequency multiplication processing on the frequency-domain signal to obtain a frequency multiplication signal; perform phase inversion processing on the frequency-domain signal and the frequency multiplication signal; and convert, through inverse fast Fourier transform, the frequency-domain signal and the frequency multiplication signal that have undergone phase inversion processing into time-domain signals, to obtain the first noise suppression signal.

Optionally, the processing unit 402 is configured to: obtain a quantity of cylinders of an engine in the range extender; determine a frequency multiplication order based on the quantity of cylinders of the engine; and perform frequency multiplication processing on the frequency-domain signal based on the frequency multiplication order to obtain the frequency multiplication signal.

Optionally, the processing unit 402 is configured to: when the quantity of cylinders of the engine is 2 or 4, determine that the frequency multiplication order is 2 and 4; or when the quantity of cylinders of the engine is 3, determine that the frequency multiplication order is 3 and 6.

Optionally, the obtaining unit 401 is further configured to obtain a noise signal collected by a microphone in the vehicle.

The processing unit is further configured to: calculate noise suppression effect based on the noise signal; perform phase inversion processing by using a first phase value and a second phase value as a phase of a first frequency-domain signal and a phase of a first frequency multiplication signal respectively; and when the noise suppression effect meets a condition after the first phase value and the second phase value are used to perform phase inversion processing, perform phase inversion processing by using the first phase value and the second phase value as a phase of a second frequency-domain signal and a phase of a second frequency multiplication signal respectively.

The second frequency-domain signal and the first frequency-domain signal are frequency-domain signals obtained through conversion of two consecutive electricity generation rotational speed signals, and the second frequency multiplication signal is a frequency multiplication signal of the second frequency-domain signal.

Optionally, the processing unit 402 is further configured to: when the noise suppression effect does not meet the condition after the first phase value and the second phase value are used to perform phase inversion processing, adjust the first phase value and the second phase value to obtain a third phase value and a fourth phase value, and perform phase inversion processing by using the third phase value and the fourth phase value as the phase of the second frequency-domain signal and the phase of the second frequency multiplication signal respectively.

Optionally, the output unit 404 is configured to: when a quantity of people in the vehicle is less than a people quantity threshold, output the first noise suppression signal through a headrest speaker of a seat in the vehicle; or when a quantity of people in the vehicle is not less than a people quantity threshold, output the first noise suppression signal through all speakers in the vehicle.

It should be noted that, when the vehicle control apparatus provided in the foregoing embodiment performs vehicle control, division of the foregoing functional units is used as an example for illustration. In actual application, the foregoing functions can be allocated to different functional units and implemented according to a requirement. That is, an inner structure of a device is divided into different functional units, to implement all or some of the functions described above. In addition, the vehicle control apparatus provided in the foregoing embodiment and the vehicle control method embodiments pertain to a same concept. For a specific implementation process of the apparatus, refer to the method embodiments. Details are not described herein again.

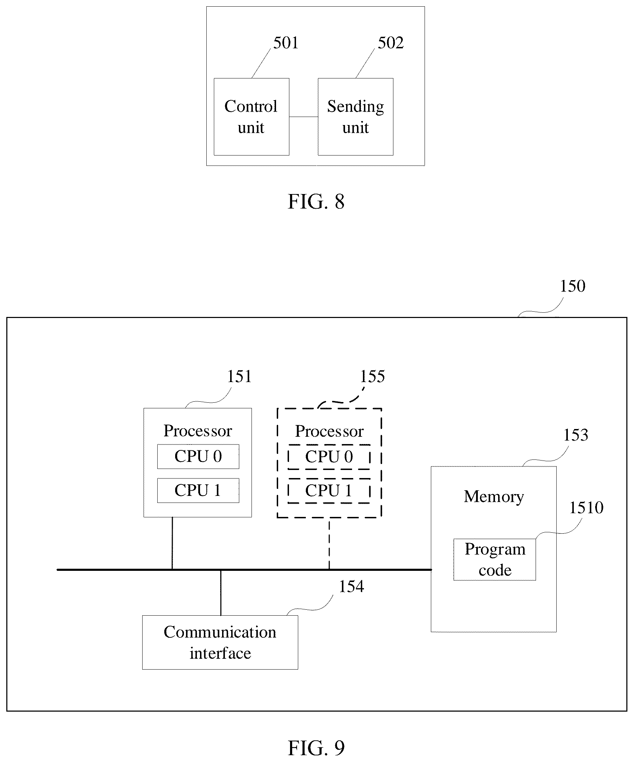

FIG. 8 is a block diagram of a vehicle control apparatus according to an embodiment of this application. The vehicle control apparatus may be implemented as all or a part of a vehicle control unit by using software, hardware, or a combination thereof. The vehicle control apparatus may include a control unit 501 and a sending unit 502.

The control unit 501 is configured to: when a vehicle meets a first condition, control a range extender of the vehicle to work.

The sending unit 502 is configured to: when the range extender works, send an active noise reduction instruction to an active noise reduction system of the vehicle, so that the active noise reduction system generates a first noise suppression signal based on an electricity generation rotational speed signal of the range extender, where the first noise suppression signal is used to suppress noise during working of the range extender.

Optionally, the first condition includes at least one of the following conditions:
a state of charge of the vehicle is lower than a first threshold, or a vehicle speed of the vehicle reaches a second threshold.

When the vehicle speed of the vehicle reaches the second threshold, wind noise and road noise that are generated when the vehicle travels suppress some of the noise during working of the range extender.

Optionally, the control unit 501 is configured to: obtain a first rotational speed and a first torque that are used to control the range extender, where the first rotational speed and the first torque are a rotational speed and a torque that are selected based on a fuel-to-electricity conversion efficiency curve of the range extender, fuel-to-electricity conversion efficiency, on the fuel-to-electricity conversion efficiency curve, corresponding to the first rotational speed and the first torque is greater than a third threshold, the first rotational speed is not equal to a second rotational speed, and the second rotational speed is a rotational speed that causes resonance of the vehicle; and control a rotational speed of a generator in the range extender based on the first rotational speed, and control a torque of an engine in the range extender based on the first torque, to enable the range extender to work.

Optionally, the control unit 501 is further configured to: when the vehicle meets a second condition, control the range extender of the vehicle to stop working.

The second condition includes at least one of the following:
the state of charge of the vehicle is not lower than the first threshold, or the vehicle speed of the vehicle is lower than a fourth threshold.

It should be noted that, when the vehicle control apparatus provided in the foregoing embodiment performs vehicle control, division of the foregoing functional units is used as an example for illustration. In actual application, the foregoing functions can be allocated to different functional units and implemented according to a requirement. That is, an inner structure of a device is divided into different functional units, to implement all or some of the functions described above. In addition, the vehicle control apparatus provided in the foregoing embodiment and the vehicle control method embodiments pertain to a same concept. For a specific implementation process of the apparatus, refer to the method embodiments. Details are not described herein again.

FIG. 9 is a diagram of a structure of a device 150 according to an embodiment of this application. The device 150 may be an active noise reduction system or a vehicle control unit. The device 150 shown in FIG. 9 is configured to perform operations related to the vehicle control method shown in any one of FIG. 3 to FIG. 5. The device 150 may be implemented by using a general bus architecture.

As shown in FIG. 9, the device 150 includes at least one processor 151, a memory 153, and at least one communication interface 154.

The processor 151 is, for example, a general-purpose central processing unit (central processing unit, CPU), a digital signal processor (digital signal processor, DSP), a network processor (network processor, NP), a data processing unit (Data Processing Unit, DPU), a microprocessor, or one or more integrated circuits configured to implement the solutions of this application. For example, the processor 151 includes an application-specific integrated circuit (application-specific integrated circuit, ASIC), a programmable logic device (programmable logic device, PLD), or another programmable logic device, a transistor logic device, a hardware component, or any combination thereof. The PLD is, for example, a complex programmable logic device (complex programmable logic device, CPLD), a field-programmable gate array (field-programmable gate array, FPGA), generic array logic (generic array logic, GAL), or any combination thereof. The processor may implement or execute various logical blocks, modules, and circuits described with reference to the content disclosed in embodiments of this application. Alternatively, the processor may be a combination of processors implementing a computing function, for example, a combination including one or more microprocessors, or a combination of a DSP and a microprocessor.

Optionally, the device 150 further includes a bus. The bus is configured to transfer information between components of the device 150. The bus may be a peripheral component interconnect (peripheral component interconnect, PCI for short) bus, an extended industry standard architecture (extended industry standard architecture, EISA for short) bus, or the like. Buses may be classified into an address bus, a data bus, a control bus, and the like. For ease of representation, only one thick line is for representing the bus in FIG. 9, but this does not mean that there is only one bus or only one type of bus.

The memory 153 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or other compact disc storage, optical disk storage (including compact disc, laser disc, optical disc, digital versatile disc, Blu-ray disc, and the like), a magnetic disk storage medium or another magnetic storage device, or any other medium that can be used to carry or store expected program code in a form of instruction or data structure and that can be accessed by a computer, but is not limited thereto. For example, the memory 153 exists independently, and is connected to the processor 151 through the bus. The memory 153 may alternatively be integrated with the processor 151.

The communication interface 154 uses any apparatus such as a transceiver, and is configured to communicate with another device or a communication network. The communication network may be an Ethernet, a radio access network (RAN), a wireless local area network (wireless local area network, WLAN), or the like. The communication interface 154 may include a wired communication interface, and may further include a wireless communication interface. Specifically, the communication interface 154 may be an Ethernet (Ethernet) interface, a fast Ethernet (Fast Ethernet, FE) interface, a gigabit Ethernet (Gigabit Ethernet, GE) interface, an asynchronous transfer mode (Asynchronous Transfer Mode, ATM) interface, a wireless local area network (wireless local area network, WLAN) interface, a cellular network communication interface, or a combination thereof. The Ethernet interface may be an optical interface, an electrical interface, or a combination thereof. In this embodiment of this application, the communication interface 154 may be used by the device 150 to communicate with the another device.

During specific implementation, in an embodiment, the processor 151 may include one or more CPUs, for example, a CPU 0 and a CPU 1 shown in FIG. 9. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the device 150 may include a plurality of processors, such as a processor 151 and a processor 155 shown in FIG. 9. Each of the processors may be a single-core processor (single-CPU), or may be a multi-core processor (multi-CPU). The processor herein may be one or more devices, circuits, and/or processing cores configured to process data (for example, computer program instructions).

During specific implementation, in an embodiment, the device 150 may further include an output device and an input device. The output device communicates with the processor 151, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, a projector (projector), or the like. The input device communicates with the processor 151, and may receive an input from a user in a plurality of manners. For example, the input device may be a mouse, a keyboard, a touchscreen device, a sensor device, or the like.

In some embodiments, the memory 153 is configured to store program code 1510 for executing the solutions of this application, and the processor 151 may execute the program code 1510 stored in the memory 153. In other words, the device 150 may execute, through the processor 151, the program code 1510 in the memory 153, to implement the data processing method provided in the method embodiments. The program code 1510 may include one or more software modules. Optionally, the processor 151 may also store program code or instructions for executing the solutions of this application.

In a specific embodiment, the device 150 in this embodiment of this application may correspond to the controller in the foregoing method embodiments. The processor 151 in the device 150 reads instructions in the memory 153, so that the device 150 shown in FIG. 9 can perform all or some operations performed by the controller.

Specifically, the processor 151 is configured to: when a range extender of a vehicle works, obtain an electricity generation rotational speed signal of the range extender; generate a first noise suppression signal based on the electricity generation rotational speed signal, where the first noise suppression signal is used to suppress noise during working of the range extender; and output the first noise suppression signal through a speaker in the vehicle.

Alternatively, the processor 151 is configured to: when a vehicle meets a first condition, control a range extender of the vehicle to work; and when the range extender works, send an active noise reduction instruction to an active noise reduction system of the vehicle, so that the active noise reduction system generates a first noise suppression signal based on an electricity generation rotational speed signal of the range extender, where the first noise suppression signal is used to suppress noise during working of the range extender.

For brevity, another optional implementation is not described herein again.

Steps of the vehicle control method shown in any one of FIG. 3 to FIG. 5 are completed by using an integrated logic circuit of hardware in the processor of the device 150 or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is in a memory. The processor reads information in the memory, and completes the steps of the foregoing methods in combination with hardware of the processor. To avoid repetition, details are not described herein again.

An embodiment of this application further provides a chip, including an input interface, an output interface, a processor, and a memory. The input interface, the output interface, the processor, and the memory are connected through an internal connection path. The processor is configured to execute code in the memory. When the code is executed, the processor is configured to perform any one of the foregoing vehicle control methods.

It should be understood that the processor may be a CPU, or may be another general-purpose processor, a DSP, an ASIC, an FPGA, or another programmable logic device, a discrete gate or a transistor logic device, a discrete hardware component, or the like. The general-purpose processor may be a microprocessor or any conventional processor or the like. It should be noted that the processor may be a processor that supports an ARM architecture.

Further, in an optional embodiment, there are one or more processors and one or more memories. Optionally, the memory and the processor may be integrated together, or the memory and the processor may be separately disposed. The memory may include a read-only memory and a random access memory, and provide instructions and data to the processor. The memory may further include a non-volatile random access memory. For example, the memory may further store a reference block and a target block.

The memory may be a volatile memory or a non-volatile memory, or may include both a volatile memory and a non-volatile memory. The non-volatile memory may be a ROM, a PROM, an EPROM, an EEPROM, or a flash memory. The volatile memory may be a RAM, and serves as an external cache. By way of example rather than limitative description, many forms of RAMs are available, for example, an SRAM, a DRAM, an SDRAM, a DDR SDRAM, an ESDRAM, an SLDRAM, and a DR RAM.

An embodiment of this application further provides a computer-readable storage medium. The computer-readable storage medium stores computer instructions. When the computer instructions stored in the computer-readable storage medium are executed by an electronic device, the electronic device is enabled to perform the vehicle control method provided above.

An embodiment of this application further provides a computer program product including instructions. When the computer program product is run on an electronic device, the electronic device is enabled to perform the vehicle control method provided above.

All or some of the foregoing embodiments may be implemented by using software, hardware, firmware, or any combination thereof. When software is used to implement the embodiments, all or some of the embodiments may be implemented in a form of computer program product. The computer program product includes one or more computer instructions. When the computer program instructions are loaded and executed on a computer, all or some of the processes or functions described in this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk)), or the like.

An embodiment of this application further provides a vehicle. The vehicle includes a range extender and an electronic device. The electronic device is connected to the range extender, and the electronic device is configured to implement the vehicle control method provided above.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are merely optional embodiments of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

Unless otherwise defined, a technical term or a scientific term used herein should have a general meaning understood by a person of ordinary skill in the art of this application. In the specification and claims of this application, terms such as "first", "second", and "third" do not indicate any order, quantity, or importance, but are merely used to distinguish different components. Likewise, "a/an", "one", or the like is not intended to indicate a quantity limitation either, but is intended to indicate existing at least one. Terms such as "include" and "comprise" mean that an element or object before the "include" or "comprise" encompasses elements or objects and their equivalents listed after the "include" or "comprise", and other elements or objects are not excluded.

The foregoing descriptions are merely embodiments of this application, but are not intended to limit this application. Any modification, equivalent replacement, or improvement made within the spirit or principle of this application should fall within the protection scope of this application.

## Claims

1. A vehicle control method, wherein the method comprises:
when a range extender of a vehicle works, obtaining, by an active noise reduction system, an electricity generation rotational speed signal of the range extender;
generating, by the active noise reduction system, a first noise suppression signal based on the electricity generation rotational speed signal, wherein the first noise suppression signal is used to suppress noise during working of the range extender; and
outputting, by the active noise reduction system, the first noise suppression signal through a speaker in the vehicle.

2. The method according to claim 1, wherein generating, by the active noise reduction system, the first noise suppression signal based on the electricity generation rotational speed signal comprises:
converting, by the active noise reduction system, the electricity generation rotational speed signal into a frequency-domain signal through fast Fourier transform;
performing, by the active noise reduction system, frequency multiplication processing on the frequency-domain signal to obtain a frequency multiplication signal;
performing, by the active noise reduction system, phase inversion processing on the frequency-domain signal and the frequency multiplication signal; and
converting, by the active noise reduction system through inverse fast Fourier transform, the frequency-domain signal and the frequency multiplication signal that have undergone phase inversion processing into time-domain signals, to obtain the first noise suppression signal.

3. The method according to claim 2, wherein performing, by the active noise reduction system, frequency multiplication processing on the frequency-domain signal to obtain the frequency multiplication signal comprises:
obtaining, by the active noise reduction system, a quantity of cylinders of an engine in the range extender;
determining, by the active noise reduction system, a frequency multiplication order based on the quantity of cylinders of the engine; and
performing, by the active noise reduction system, frequency multiplication processing on the frequency-domain signal based on the frequency multiplication order to obtain the frequency multiplication signal.

4. The method according to claim 3, wherein determining, by the active noise reduction system, the frequency multiplication order based on the quantity of cylinders of the engine comprises:
when the quantity of cylinders of the engine is 2 or 4, determining, by the active noise reduction system, that the frequency multiplication order is 2 and 4; or
when the quantity of cylinders of the engine is 3, determining, by the active noise reduction system, that the frequency multiplication order is 3 and 6.

5. The method according to any one of claims 2 to 4, wherein the method further comprises:
obtaining, by the active noise reduction system, a noise signal collected by a microphone in the vehicle; and
calculating, by the active noise reduction system, noise suppression effect based on the noise signal; and
performing, by the active noise reduction system, phase adjustment processing on the frequency-domain signal and the frequency multiplication signal comprises:
performing, by the active noise reduction system, phase inversion processing by using a first phase value and a second phase value as a phase of a first frequency-domain signal and a phase of a first frequency multiplication signal respectively; and
when the noise suppression effect meets a condition after the first phase value and the second phase value are used to perform phase inversion processing, performing, by the active noise reduction system, phase inversion processing by using the first phase value and the second phase value as a phase of a second frequency-domain signal and a phase of a second frequency multiplication signal respectively, wherein
the second frequency-domain signal and the first frequency-domain signal are frequency-domain signals obtained through conversion of two consecutive electricity generation rotational speed signals, and the second frequency multiplication signal is a frequency multiplication signal of the second frequency-domain signal.

6. The method according to claim 5, wherein the performing, by the active noise reduction system, phase adjustment processing on the frequency-domain signal and the frequency multiplication signal further comprises:
when the noise suppression effect does not meet the condition after the first phase value and the second phase value are used to perform phase inversion processing, adjusting, by the active noise reduction system, the first phase value and the second phase value to obtain a third phase value and a fourth phase value, and performing phase inversion processing by using the third phase value and the fourth phase value as the phase of the second frequency-domain signal and the phase of the second frequency multiplication signal respectively.

7. The method according to any one of claims 1 to 6, wherein outputting, by the active noise reduction system, the first noise suppression signal through the speaker in the vehicle comprises:
when a quantity of people in the vehicle is less than a people quantity threshold, outputting, by the active noise reduction system, the first noise suppression signal through a headrest speaker of a seat in the vehicle; or
when a quantity of people in the vehicle is not less than a people quantity threshold, outputting, by the active noise reduction system, the first noise suppression signal through all speakers in the vehicle.

8. A vehicle control method, wherein the method comprises:
when a vehicle meets a first condition, controlling, by a vehicle control unit, a range extender of the vehicle to work; and
when the range extender works, sending, by the vehicle control unit, an active noise reduction instruction to an active noise reduction system of the vehicle, so that the active noise reduction system generates a first noise suppression signal based on an electricity generation rotational speed signal of the range extender, wherein the first noise suppression signal is used to suppress noise during working of the range extender.

9. The method according to claim 8, wherein the first condition comprises at least one of the following conditions:
a state of charge of the vehicle is lower than a first threshold, or a vehicle speed of the vehicle reaches a second threshold.

10. The method according to claim 9, wherein controlling, by the vehicle control unit, the range extender of the vehicle to work comprises:
obtaining, by the vehicle control unit, a first rotational speed and a first torque that are used to control the range extender, wherein the first rotational speed and the first torque are a rotational speed and a torque that are selected based on a fuel-to-electricity conversion efficiency curve of the range extender, fuel-to-electricity conversion efficiency, on the fuel-to-electricity conversion efficiency curve, corresponding to the first rotational speed and the first torque is greater than a third threshold, the first rotational speed is not equal to a second rotational speed, and the second rotational speed is a rotational speed that causes resonance of the vehicle; and
controlling, by the vehicle control unit, a rotational speed of a generator in the range extender based on the first rotational speed, and controlling a torque of an engine in the range extender based on the first torque.

11. The method according to any one of claims 8 to 10, wherein the method further comprises:
when the vehicle meets a second condition, controlling, by the vehicle control unit, the range extender of the vehicle to stop working, wherein
the second condition comprises at least one of the following:
the state of charge of the vehicle is not lower than the first threshold, or the vehicle speed of the vehicle is lower than a fourth threshold.

12. A vehicle control apparatus, wherein the apparatus comprises:
an obtaining unit, configured to: when a range extender of a vehicle works, obtain an electricity generation rotational speed signal during working of the range extender;
a processing unit, configured to generate a first noise suppression signal based on the electricity generation rotational speed signal, wherein the first noise suppression signal is used to suppress noise during working of the range extender; and
an output unit, configured to output the first noise suppression signal through a speaker in the vehicle.

13. The apparatus according to claim 12, wherein the processing unit is configured to: convert the electricity generation rotational speed signal into a frequency-domain signal through fast Fourier transform; perform frequency multiplication processing on the frequency-domain signal to obtain a frequency multiplication signal; perform phase inversion processing on the frequency-domain signal and the frequency multiplication signal; and convert, through inverse fast Fourier transform, the frequency-domain signal and the frequency multiplication signal that have undergone phase inversion processing into time-domain signals, to obtain the first noise suppression signal.

14. The apparatus according to claim 13, wherein the processing unit is configured to: obtain a quantity of cylinders of an engine in the range extender; determine a frequency multiplication order based on the quantity of cylinders of the engine; and perform frequency multiplication processing on the frequency-domain signal based on the frequency multiplication order to obtain the frequency multiplication signal.

15. The apparatus according to claim 14, wherein the processing unit is configured to: when the quantity of cylinders of the engine is 2 or 4, determine that the frequency multiplication order is 2 and 4; or when the quantity of cylinders of the engine is 3, determine that the frequency multiplication order is 3 and 6.

16. The apparatus according to any one of claims 13 to 15, wherein the obtaining unit is further configured to obtain a noise signal collected by a microphone in the vehicle; and
the processing unit is further configured to: calculate noise suppression effect based on the noise signal; perform phase inversion processing by using a first phase value and a second phase value as a phase of a first frequency-domain signal and a phase of a first frequency multiplication signal respectively; and when the noise suppression effect meets a condition after the first phase value and the second phase value are used to perform phase inversion processing, perform phase inversion processing by using the first phase value and the second phase value as a phase of a second frequency-domain signal and a phase of a second frequency multiplication signal respectively, wherein
the second frequency-domain signal and the first frequency-domain signal are frequency-domain signals obtained through conversion of two consecutive electricity generation rotational speed signals, and the second frequency multiplication signal is a frequency multiplication signal of the second frequency-domain signal.

17. The apparatus according to claim 16, wherein the processing unit is further configured to: when the noise suppression effect does not meet the condition after the first phase value and the second phase value are used to perform phase inversion processing, adjust the first phase value and the second phase value to obtain a third phase value and a fourth phase value, and perform phase inversion processing by using the third phase value and the fourth phase value as the phase of the second frequency-domain signal and the phase of the second frequency multiplication signal respectively.

18. The apparatus according to any one of claims 12 to 17, wherein the output unit is configured to: when a quantity of people in the vehicle is less than a people quantity threshold, output the first noise suppression signal through a headrest speaker of a seat in the vehicle; or when a quantity of people in the vehicle is not less than a people quantity threshold, output the first noise suppression signal through all speakers in the vehicle.

19. A vehicle control apparatus, wherein the apparatus comprises:
a control unit, configured to: when a vehicle meets a first condition, control a range extender of the vehicle to work; and
a sending unit, configured to: when the range extender works, send an active noise reduction instruction to an active noise reduction system of the vehicle, so that the active noise reduction system generates a first noise suppression signal based on an electricity generation rotational speed signal of the range extender, wherein the first noise suppression signal is used to suppress noise during working of the range extender.

20. The apparatus according to claim 19, wherein the first condition comprises at least one of the following conditions:
a state of charge of the vehicle is lower than a first threshold, or a vehicle speed of the vehicle reaches a second threshold.

21. The apparatus according to claim 20, wherein the control unit is configured to: obtain a first rotational speed and a first torque that are used to control the range extender, wherein the first rotational speed and the first torque are a rotational speed and a torque that are selected based on a fuel-to-electricity conversion efficiency curve of the range extender, fuel-to-electricity conversion efficiency, on the fuel-to-electricity conversion efficiency curve, corresponding to the first rotational speed and the first torque is greater than a third threshold, the first rotational speed is not equal to a second rotational speed, and the second rotational speed is a rotational speed that causes resonance of the vehicle; and control a rotational speed of a generator in the range extender based on the first rotational speed, and control a torque of an engine in the range extender based on the first torque, to enable the range extender to work.

22. The apparatus according to any one of claims 19 to 21, wherein the control unit is further configured to: when the vehicle meets a second condition, control the range extender of the vehicle to stop working, wherein
the second condition comprises at least one of the following:
the state of charge of the vehicle is not lower than the first threshold, or the vehicle speed of the vehicle is lower than a fourth threshold.

23. An electronic device, wherein the electronic device comprises a processor and a memory, the memory is configured to store a software program, and the processor runs or executes the software program stored in the memory, to enable the electronic device to implement the method according to any one of claims 1 to 11.

24. A computer-readable storage medium, wherein the computer-readable storage medium is configured to store program code executed by a processor, and the program code comprises instructions for implementing the method according to any one of claims 1 to 11.

25. A vehicle, wherein the vehicle comprises the apparatus according to any one of claims 12 to 18, or the apparatus according to any one of claims 19 to 22.

26. A vehicle control system, wherein the vehicle control system comprises a vehicle control unit, an active noise reduction system, and a range extender system;
the vehicle control unit is configured to: when a vehicle meets a first condition, control a range extender in the range extender system to work; and when the range extender works, send an active noise reduction instruction to the active noise reduction system of the vehicle; and
the active noise reduction system is configured to: when the range extender works, obtain an electricity generation rotational speed signal of the range extender; when receiving the active noise reduction instruction, generate a first noise suppression signal based on the electricity generation rotational speed signal, wherein the first noise suppression signal is used to suppress noise during working of the range extender; and output the first noise suppression signal through a speaker in the vehicle.

27. A computer program product, comprising program code, wherein when a computer runs the computer program product, the computer is enabled to perform the method according to any one of claims 1 to 11.
